# EUROPÄISCHE PATENTSCHRIFT

(11) **EP 0 779 640 B1**
(45) Veröffentlichungstag und Bekanntmachung des Hinweises auf die Patenterteilung: **09.06.2004**
(21) Anmeldenummer: 96118885.1
(22) Anmeldetag: 26.11.1996
(51) Int. Cl.: H01H 50/02, H01H 47/00, H01H 47/18

(54) **Busfähiger Verstärkerbaustein für Antriebsanordnungen elektromagnetischer Schaltgeräte**
Amplifier module with bus interface, for control arrangement of switching devices
Module d'amplification avec interface de bus pour agencements de commande de dispositifs de commutation

(30) Priorität: 12.12.1995 DE 19546268; 12.12.1995 DE 29519678 U
(43) Veröffentlichungstag der Anmeldung: 18.06.1997
(73) Patentinhaber: Moeller GmbH, 53115 Bonn (DE)
(72) Erfinder: Esser, Wolfgang, 53773 Hennef (DE)

(56) Entgegenhaltungen:
- EP-A- 0 637 784
- DE-A- 4 141 844
- DE-C- 4 311 096

## Beschreibung

Die Erfindung betrifft einen busfähigen Verstärkerbaustein für Antriebsanordnungen elektromagnetischer Schaltgeräte, der eine elektromagnetische oder elektronische Verstärkeranordnung enthält, die über eine Schnittstellenschaltung mit Busanschlüssen und einerseits mit Speisestromanschlüssen sowie anderseits mit Antriebsanschlüssen verbunden ist.

Aus der technisch-wissenschaftlichen Veröffentlichung der Fa. Klöckner-Moeller GmbH "Spezialisten beim Schalten und Schützen: System-Schütze DIL M, DIL R" (Druckvermerk: 8/91 VER 21-767 FLS/Wi), S. 5, 6 u. 8 sind derartige Verstärkerbausteine bekannt. Diese Verstärkerbausteine sind an einem Schütz unterhalb dessen Zugangsbereiches für die zugehenden Leistungsanschlüsse aufsteckbar, sind ausgangsseitig über ihre Antriebsanschlüsse mit den Spulenanschlüssen des elektromagnetischen Schützantriebes zu verbinden und sind eingangsseitig einerseits über ihre Steueranschlüsse mit einem Steuerstromkreis und anderseits über ihre Speisestromanschlüsse mit einem Speisestromkreis zu verbinden. Der Verstärkerbaustein beinhaltet neben einer Schutzbeschaltung und einer LED-Schaltzustandsanzeige ein Schaltrelais, dessen Steuerspule vom Steuerstromkreis beaufschlagt wird und dessen Relaiskontakt die Speisestromzuführung zum Schützantrieb ein- und abschaltet. Der Steuergleichstrom wird von Elektroniksteuerungen oder von Schaltgeräten mit niedrigem Leistungsniveau bei niedrigem Spannungspegel (z.B. 24 V) geliefert, wogegen der Speisestrom mit Vorteil aus einer davon galvanisch getrennten Wechselstromquelle mit höherem Spannungspegel (z.B. 230 V) geliefert wird, so daß auf diese Weise Schütze hoher Nennleistung durch Steuerungen niedriger Ausgangsleistung angesteuert werden können.

Aus der DE 38 43 944 A1 ist ein in einem Gehäuse angeordnetes Schütz bekannt, dessen elektromagnetischer Antrieb über ein Leitungssystem aus beliebiger Entfernung ansteuerbar ist, wobei die Ansteuerung des elektromagnetischen Antriebes über eine Installationsbusleitung vorgesehen ist und hierfür innerhalb des Schützgehäuses ein Buskoppler mit einem Adresseneingabeschalter sowie zusätzlich ein vom Buskoppler direkt oder indirekt beeinflußbares Schaltrelais angeordnet ist, das eine Schaltstelle im Speisestromkreis für den elektromagnetischen Antrieb bildet. Insbesondere ist als Installationsbusleitung ein Zweidrahtbus vorgesehen und zwischen Buskoppler und dem von diesem beeinflußbaren Schaltrelais eine elektrische oder elektronische Baugruppe zwischengeschaltet, welche die Ein- und Ausschaltung des Schaltrelais bewirkt.

Aus dem Sammelkatalog 1995 der Fa. Telemecanique, Katalog KSK, S. 1/43 sind über einen Bus ansteuerbare Interfacemodule bekannt, die entweder als Relais- oder als Elektronik-Schaltverstärker ausgebildet sind und als Zusatzmodul mit dem zugehörigen Schütz mechanisch und elektrisch zu verbinden sind.

Die EP 0 637 784 A1 offenbart ein busfähiges Modul, gemäβ dem Oberbegriff des Patentanspruchs 1 und dem Oberbegriff des Patentanspruchs 3, zum Schutz eines elektrischen Verbrauchers, indem bei geeigneten Strommeßwerten ein Befehl zur Abschaltung mittels eines Schutzschalters erzeugt wird. Das Modul enthält eine bidirektional ausgelegte Schnittstellenschaltung mit Busanschlüssen und Schaltungsmittel für die Erfassung an den Bus zu übergebender Signale über Zustände des Moduls sowie für vom Bus zu übernehmende Signale für Einstellparameter des Moduls. Mit diesem Modul können in Verbindung mit Stromsensoren und einem Koppeladapter elektromagnetische Antriebsanordnungen geschützt, jedoch nicht ein- und ausgeschaltet werden. Signale über Zustände der mit derartigen Antriebsanordnungen ausgestatteten Schaltgeräte lassen sich nicht über das Modul an den Bus weitergeben.

Der Erfindung liegt die Aufgabe zugrunde, einen busfähigen Verstärkerbaustein anzugeben, dessen Gebrauchseigenschaften durch zusätzliche Funktionen zu verbessern sind.

Ausgehend von einem Verstärkerbaustein der eingangs genannten Art wird die Aufgabe durch die kennzeichnenden Merkmale des Anspruches 1 gelöst. Durch die bidirektionale Auslegung der Schnittstellenschaltung in Verbindung mit den vorgeschlagenen Schaltungsmitteln ist der Verstärkerbaustein in der Lage, Zustandsinformationen an den Bus einzuspeisen und im gegebenen Falle Einstellinformationen zu verarbeiten. Dadurch wird eine geschlossene informationelle Zugänglichkeit von elektromagnetischen Schaltgeräten über die erfindungsgemäßen Verstärkerbausteine und damit eine erhebliche Steigerung des bedienungsseitigen sowie informationellen Komforts erreicht. Ein Wahlschalter erlaubt das wahlweise Betreiben des Schaltgerätes vernetzt über den Bus oder manuell über konventionelle Steuereingänge.

Der Verstärkerbaustein läßt sich in einer vorteilhaften Weiterbildung zur Ansteuerung elektrischer Verbraucher über zwei Schaltgeräte oder Schaltgerätekombinationen weiterbilden, die nicht beide gleichzeitig den bzw. die Verbraucher beaufschlagen dürfen. Damit lassen sich unterschiedliche, insbesondere gegensinnige Schaltzustände für den bzw. die Verbraucher herbeiführen, beispielsweise für den Rechts- bzw. Linkslauf eines Elektromotors. Ein Vorteil dieser Lösung ist eine höhere Packungsdichte sowie geringere Herstellungskosten durch Mehrfachausnutzung einzelner Funktionselemente des Verstärkerbausteins.

Die Aufgabe wird weiterhin durch die kennzeichnenden Merkmale des Anspruches 3 gelöst. Durch die beiden Verstärkeranordnungen und die zu deren Ansteuerung unidirektional ausgelegte Schnittstellenschaltung läßt sich dieser Verstärkerbaustein zur Ansteuerung elektrischer Verbraucher über zwei Schaltgeräte oder Schaltgerätekombinationen weiterbilden, die nicht beide gleichzeitig den Verbraucher beaufschlagen dürfen. Damit lassen sich unterschiedliche, insbesondere gegensinnige Schaltzustände für den Verbraucher herbeiführen, beispielsweise für den Rechts- bzw. Linkslauf eines Elektromotors. Ein Vorteil ist auch hier eine höhere Packungsdichte sowie geringere Herstellungskosten durch Mehrfachausnutzung einzelner Funktionselemente des Verstärkerbausteins. Ein Wahlschalter erlaubt das wahlweise Betreiben des Schaltgerätes vernetzt über den Bus oder manuell über konventionelle Steuereingänge.

Die Verstärkerbausteine können mechanisch mit den Schaltgeräten verbunden, separat aufgestellt bzw. befestigt oder auf die Schaltgeräte aufgeschnappt werden. Die elektrische Verbindung zum Schaltgerät erfolgt mit Steckanschlüssen und/oder mit fest angeschlagenen und/oder Einzelleitungen. Die Verstärkerbausteine können über mechanische Kontaktausgänge oder/und über elektronische Ausgänge, hier je nach Erfordernis analog oder digital, verfügen. Die Schnittstellenschaltung kann an beliebige Bus-Protokolle angepaßt werden. Damit ist die Einzelvernetzung der Antriebsanordnungen von Schützen, gegebenenfalls in Verbindung mit elektronischen Steuer- oder Regelanordnungen, aber auch elektromagnetischen Kraft- oder Fernantrieben anderer Schaltgeräte möglich bei beliebiger Baugröße, Bauform, Leistungsaufnahme und beliebigen Spannungsniveaus dieser anzutreibenden Geräte. Die Kommunikation mit dem Bus kann alternativ über verschiedene Medien, insbesondere metallische Leiter verschiedener Anzahl oder Lichtwellenleiter, erfolgen.

Weitere vorteilhafte Ausgestaltungen sind den Unteransprüchen zu entnehmen. Der Wahlschalter als weitere Ausbildung kann zusätzlich manuell betätigt werden. Die erfindungsgemäße Lösung ist im einfachsten Falle mittels Schaltrelais zu realisieren. Eine gegebenenfalls zusätzliche Abtastung der Wahlschalterstellung und deren Rückmeldung an den Bus erhöht den Steuerkomfort. Zeitglieder erlauben u.a. die abschalt- oder einschaltverzögerte Ansteuerung von Antriebsanordnungen und/oder dienen zur Unterdrückung von Kontaktprellungen von Ansteuerkontakten, wobei insbesondere die Parametereinstellung des Zeitgliedes über den Bus und/oder gegebenenfalls die Rückmeldung über den Zustand des Zeitgliedes an den Bus die Steuerungsmöglichkeiten erheblich erweitert. Die Zustandsmeldung vom Schaltgerät erfolgt mittels eines Hilfsschalters oder kontaktlos vorteilhafterweise über den Meldeanschluß des Verstärkerbausteins, ohne daß dafür ein eigener Busanschluß des Schaltgerätes erforderlich ist. Dies führt neben der Möglichkeit, die Schaltgeräte hinsichtlich der Spannungsvarianten und der Stromvarianten zu reduzieren, auch zu einer Reduzierung der Schaltgeräte hinsichtlich der Varianten zur Buskommunikation. Die Zustandsmeldung von der Verstärkeranordnung bezweckt eine weitere Erhöhung des Vernetzungskomforts.

Die Erfindung soll nachstehend an drei Ausführungsbeispielen, aus denen weiterer Merkmale und Vorteile zu ersehen sind erläutert werden. In der zugehörigen Zeichnung zeigt
- Figur 1:: eine teilweise auseinandergezoge und perspektivisch dargestellte mechanische Ausführung der ersten Art des Verstärkerbausteins mit einem Schütz;
- Figur 2:: die prinzipielle elektrische Darstellung der Verstärkerbausteins der ersten Art;
- Figur 3:: eine teilweise auseinandergezogene und in Frontalansicht dargestellte mechanische Ausführung der zweiten und der dritten Art des Verstärkerbausteins mit zwei Schützen;
- Figur 4:: die prinzipielle elektrische Darstellung des Verstärkerbausteins der zweiten Art;
- Figur 5:: die prinzipielle elektrische Darstellung des Verstärkerbausteins der dritten Art;

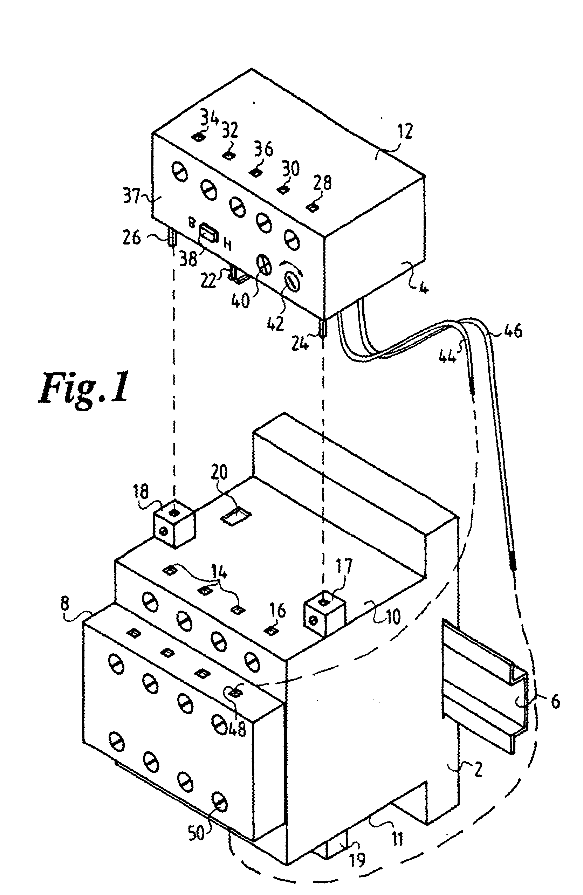

In Fig. 1 ist ein Schütz 2 als elektrisches Schaltgerät zusammen mit einem busfähigen Verstärkerbaustein 4 der ersten Art dargestellt. Das Schütz 2 ist auf einer Tragschiene 6 montiert und mit einem Hilfsschalterblock 8 versehen. Auf jeder Zugangsseite 10, 11 des Schützes 2 sind in einer Reihe je drei Leistungsklemmen 14 und je eine Hilfsschalterklemme 16 sowie unterhalb dieser eine angeformte Spulenklemme 17 bzw. 19 angeordnet. Die Spulenklemmen 17, 19 sind innerhalb des Schützes 2 elektrisch miteinander verbunden und bilden zusammen mit einer unterhalb der Leistungsklemmen 14 nur auf der einen Zugangsseite 10 angeformten separaten Spulenklemme 18 die beiden Seiten der Stromzuführungen für die elektromagnetische Antriebsanordnung, d.h. Magnetspule, des Schützes 2. Der Verstärkerbaustein 4 wird mit Hilfe von elastischen Befestungsmitteln 20, 22 auf die Zugangsseite 10 des Schützes 2 aufgeschnappt und mit seinen Antriebsanschlüssen 24, 26 in der durch unterbrochene Geraden angedeuteten Weise elektrisch mit den Spulenklemmen 17 bzw. 18 verbunden. Der Verstärkerbaustein 4 weist auf seiner Zugangsseite 12 Klemmen für zwei Speisestromanschlüsse 28 und 30, für zwei Busanschlüsse 32 und 34 sowie für einen konventionellen Steuereingang 36 auf. Auf der Frontseite 37 des Verstärkerbausteins 4 befinden sich ein Betätigungsmittel 38 für einen Wahlschalter, eine LED-Zustandsanzeige 40 und ein Einstellmittel 42 für ein Zeitglied. Zwei Meldeanschlüsse 44, 46 in Form von endseitig angeschlagenen Leitungen werden aus dem Verstärkerbaustein 4 auf der Seite der Antriebsanschlüsse 24, 26 herausgeführt. Die Meldeanschlüsse 44, 46 sind in der durch unterbrochene krumme Linien angedeuteten Weise mit den Hilfsschalterklemmen 48, 50 am Hilfsschalterblock 8 zu verbinden, die zu einem der darin befindlichen Hilfsschalter gehören, dessen Schaltzustand den Zustand des Schützes 2 meldet.

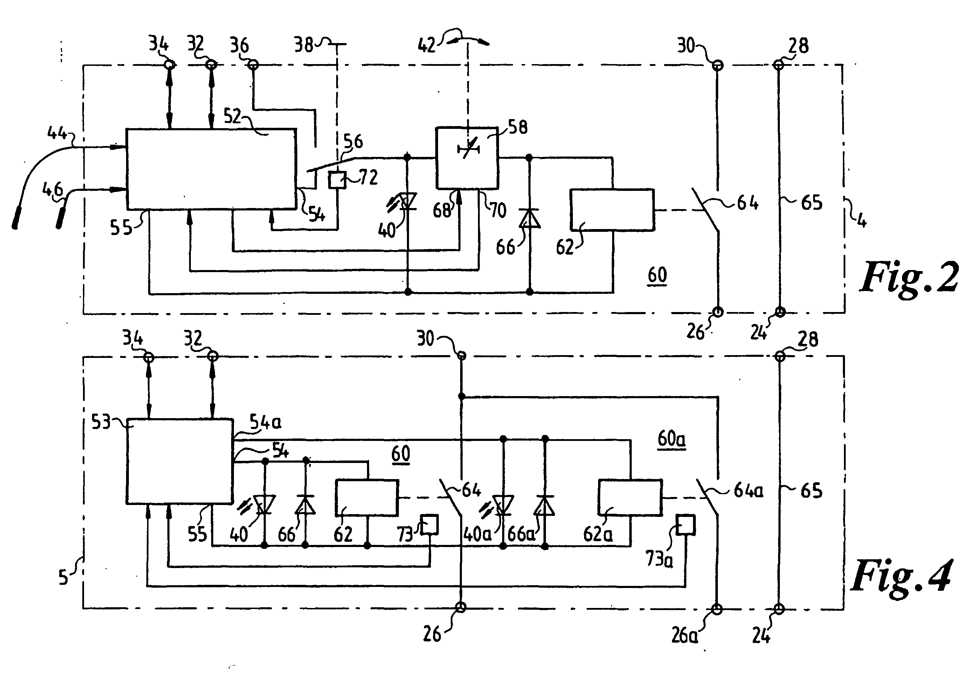

In Fig. 2 ist der innere elektrische Aufbau des Verstärkerbausteins 4 dargestellt. Durch einen mit den Busanschlüssen 32, 34 verbundenen externen Bus erfolgt die Ansteuerung des Verstärkerbausteins 4 entsprechend dem vereinbarten Bus-Protokoll und gegebenenfalls in Übereinstimmung mit der für den Verstärkerbaustein 4 vergebenen Adresse über eine Schnittstellenschaltung 52. Das vom Bus bewirkte Steuersignal gelangt vom Steuerausgang 54 der Schnittstellenschaltung 52 über einen Wahlschalter 56 und von da zeitverzögert über ein Zeitglied 58 an eine elektromagnetische Verstärkeranordnung in Form eines Schaltrelais 60 und wird von dort zu dem Bezugspotentialanschluß 55 der Schnittstellenschaltung 52 zurückgeführt. Das Schaltrelais 60 beinhaltet eine Steuerspule 62 und einen Schließer-Relaiskontakt 64. Bei geschlossenem Relaiskontakt 64 gelangt der von einem äußeren Speisestromkreis gelieferte Speisestrom für die Antriebsanordnung des Schützes über den einen Speisestromanschluß 30 zu dem einen Antriebsanschluß 26 und wird von dem anderen Antriebsanschluß 24 über eine innere Verbindungsleitung 65 direkt zu dem anderen Speisestromanschluß 28 zurückgeführt. Parallel zur Steuerspule 62 ist eine Freilaufdiode 66 und eingangsseitig zum Zeitglied 58 die LED-Zustandsanzeige 40 angeordnet.

Die bei Null beginnende Zeitverzögerung des Zeitgliedes 58 wird entweder manuell über dessen Einstellmittel 42 eingestellt oder busgesteuert über die Busanschlüsse 32, 34 und schließlich aufbereitet durch die Schnittstellenschaltung 52 über einen Parametereingang 68 des Zeitgliedes 58 eingegeben. Der Zustand des Zeitgliedes 58 und dessen aktuelle Verzögerungszeit werden über dessen Parameterausgang 70 und aufbereitet durch die bidirektional arbeitende Schnittstellenschaltung 52 über die Busanschlüsse 32, 34 bei Abfrage an den Bus ausgegeben. Die Zustandsmeldung vom Schütz wird in analoger Weise über die Meldeanschlüssen 44 und 46 an die Schnittstellenschaltung 52 signalisiert und von dort über die Busanschlüsse 32, 34 an den Bus übergeben. Über sein Betätigungsmittel 38 kann der Wahlschalter 56 das Zeitglied 58 vom Steuerausgang 54 der Schnittstellenschaltung 52 trennen und dagegen mit dem konventionellen Steuereingang 36 verbinden, wodurch das Schaltrelais 60 dann alternativ durch konventionelle Befehlsgeräte ansteuerbar ist. Der Schaltzustand des Wahlschalters 56 wird durch ein Abtastmittel 72, beispielsweise einen Magnetsensor, erfaßt und durch die Schnittstellenschaltung 52 über die Busanschlüsse 32, 34 an den Bus ausgegeben. Durch den in beiden Richtungen mit dem Bus kommunizierfähigen Verstärkerbaustein 4 ist dieser zusammen mit dem Schütz 2 sowohl passiv als auch aktiv vernetzt.

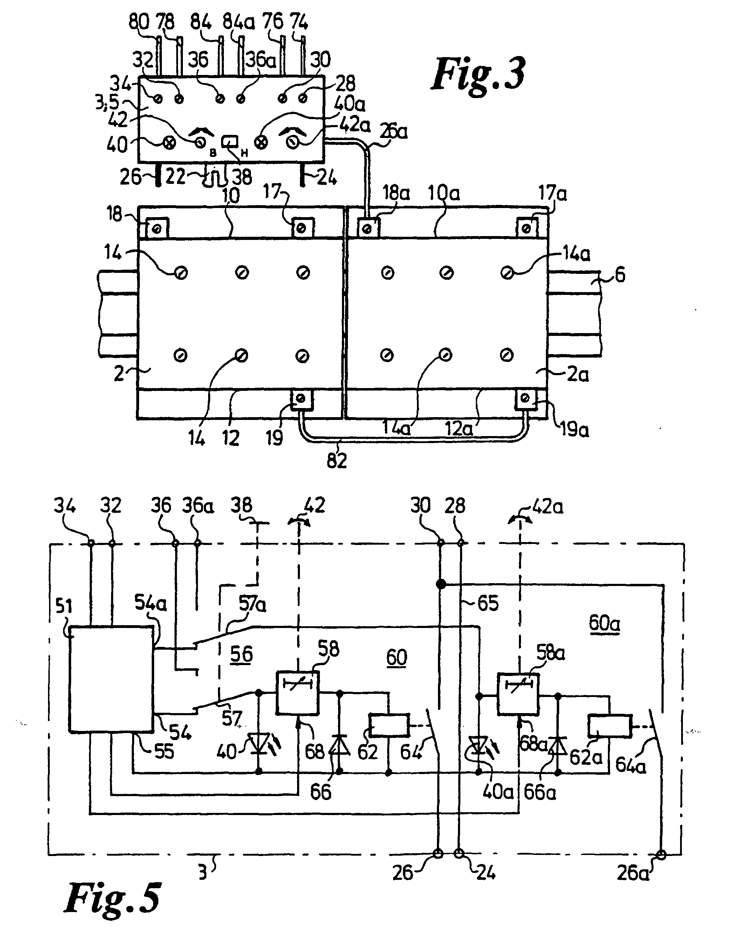

In Fig. 3 ist die Kombination eines busfähigen Verstärkerbausteins 5 der zweiten Art oder eines busfähigen Verstärkerbausteins 3 der dritten Art mit zwei nebeneinander angeordneten Schützen 2 und 2a als elektrische Schaltgeräte dargestellt. Diese Kombination dient beispielsweise als Wendeschützkombination für einen Motor als Verbraucher. Die Schütze 2, 2a sind auf einer Tragschiene 6 montiert. Die Schütze 2, 2a weisen unterhalb der nebeneinander liegenden jeweils drei Leistungsklemmen 14 bzw. 14a auf der einen Zugangsseite 10 bzw. 10a zwei angeformte Spulenklemmen 17, 18 bzw. 17a, 18a und auf der anderen Zugangsseite 12 bzw. 12a eine weitere angeformte Spulenklemme 19 bzw. 19a auf. Die beiden Spulenklemmen 17, 19 bzw. 17a, 19a sind innerhalb des Schützes 2 bzw. 2a elektrisch miteinander verbunden und bilden zusammen mit der anderen Spulenklemme 18 bzw. 18a die jeweils beiden Seiten der Stromzuführungen für die elektromagnetische Antriebsanordnung, d.h. Magnetspule, des Schützes 2 bzw. 2a. Der Verstärkerbaustein 5 bzw. 3 wird mittels seiner elastischen Befestigungsmittel 22 auf die Zugangsseite 10 des Schützes 2 über eine nicht dargestellte Ausnehmung aufgeschnappt und mittels seiner Antriebsanschlüsse 24, 26 mit den Spulenklemmen 17, 18 elektrisch verbunden. Der Verstärkerbaustein 5 bzw. 3 weist auf seiner den Antriebsanschlüssen 24, 26 gegenüberliegenden Seite Klemmen für zwei Speisestromanschlüsse 28, 30 zum Anschließen von Speisestromleitungen 74, 76 sowie für zwei Busanschlüsse 32, 34 zum Anschließen von Busleitungen 78, 80 sowie für zwei konventionelle Steuereingänge 36, 36a zum Anschließen von konventionellen Befehlsgeräten über Befehlsleitungen 84, 84a auf. Der Verstärkerbaustein 5 bzw. 3 ist mit einem zusätzlichen Antriebsanschluß 26a in Form einer herausgeführten, endseitig angeschlagenen Leitung versehen, die mit der einen Spulenklemme 18a des zweiten Schützes 2a verbunden ist, während die Stromzuführung für die diagonal gegenüberliegende andere Spulenklemme 19a des zweiten Schützes 2a mittels einer äußeren Verbindungsleitung 82 über die Spulenklemme 19 des ersten Schützes 2 hergestellt wird. Auf der Frontseite des Verstärkerbausteins 5 bzw. 3 befinden sich ein Betätigungsmittel 38 für einen Wahlschalter, zwei LED-Zustandsanzeigen 40, 40a und zwei Einstellmittel 42, 42a für je ein Zeitglied. Der Verstärkerbaustein 5 bzw. 3 ist elektrisch mit beiden Schützen 2 und 2a, jedoch mechanisch nur mit dem ersten Schütz 2 verbunden.

In Fig. 4 ist der innere elektrische Aufbau des Verstärkerbausteins 5 nach der zweiten Art der Erfindung dargestellt. Über die Busanschlüsse 32, 34 erfolgt die Ansteuerung des Verstärkerbaustein 5 entsprechend dem vereinbarten Bus-Protokoll und gegebenenfalls in Übereinstimmung mit der für den Verstärkerbaustein 5 vergebenen Adresse über eine bidirektionale Schnittstellenschaltung 53. Ein vom Bus bewirktes erstes Steuersignal gelangt von einem ersten Steuerausgang 54 der Schnittstellenschaltung 53 an eine erste elektromagnetische Verstärkeranordnung in Form eines ersten Schaltrelais 60. Ein vom Bus bewirktes zweites Steuersignal gelangt von einem zweiten Steuerausgang 54a der Schnittstellenschaltung 53 an eine zweite elektromagnetische Verstärkeranordnung in Form eines zweiten Schaltrelais 60a. Beide Steuersignale werden über die Steuerspulen 62, 62a der Schaltrelais 60 bzw. 60a zu dem Bezugspotentiälanschluß 55 der Schnittstellenschaltung 53 zurückgeführt. Parallel zu den Steuerspulen 62a, 62b sind jeweils eine Freilaufdiode 66 bzw. 66a und eine LED-Zustandsanzeige 40 bzw. 40a angeordnet. Bei geschlossenem Relaiskontakt 64 des ersten Schaltrelais 60 gelangt der von einem äußeren Speisestromkreis gelieferte Speisestrom für die Antriebsanordnung des ersten Schützes 2 über den einen Speisestromanschluß 30 zu dem ersten separaten Antriebsanschluß 26 und wird von dem anderen Antriebsanschluß 24 über eine innere Verbindungsleitung 65 direkt zu dem anderen Speisestromanschluß 28 geführt. Dementsprechend gelangt bei geschlossenem Relaiskontakt 64a des zweiten Schaltrelais 60a der vom äußeren Speisestromkreis gelieferte Speisestrom für die Antriebsanordnung des zweiten Schützes 2a über den einen Speisestromanschluß 30 zu dem zweiten separaten Antriebsanschluß 26a und wird von dem gemeinsamen anderen Antriebsanschluß 24 über die innere Verbindungsleitung 65 direkt zu dem anderen Speisestromanschluß 28 geführt. Die Schnittstellenschaltung 53 stellt durch ihre logische Struktur sicher, daß beide Schaltrelais 60, 60a und damit die durch diese anzusteuernden elektromagnetischen Antriebsanordnungen beider Schütze 2, 2a zu keinem Zeitpunkt gleichzeitig im aktiven Zustand sind. Den Schaltrelais 60, 60a sind zur Erfassung ihrer Schaltzustände erste bzw. zweite Abtastmittel 73 bzw. 73a zugeordnet, deren Ausgangssignale nach Aufbereitung durch die Schnittstellenschaltung 53 über die Busanschlüsse 32, 34 an den Bus übermittelt werden können.

In Fig. 4 ist aus Gründen der Übersichtlichkeit der Wahlschalter 56 zwischen den Steuerausgängen 54, 54a und den Steuerspulen 62, 62 a nicht dargestellt, kann jedoch hinsichtlich seiner Anordnung Fig. 5 entnommen werden.

In Fig. 5 ist der innere elektrische Aufbau des Verstärkerbausteins 3 dargestellt, wobei zum Teil gleichwirkende Elemente wie in der zweiten Erfindungsart verwendet werden, die mit gleichen Bezugszeichen wie in Fig. 4 versehen sind und auf die hier nicht noch einmal näher eingegangen wird. Die Ansteuerung des Verstärkerbausteins 3 erfolgt entsprechend dem vereinbarten Bus-Protokoll und gegebenenfalls in Übereinstimmung mit der für den Verstärkerbaustein 3 vergebenen Adresse hier über eine unidirektionale Schnittstellenschaltung 51. Ein vom Bus bewirktes erstes Steuersignal gelangt von einem ersten Steuerausgang 54 der Schnittstellenschaltung 51 über einen ersten Umschaltkontakt 57 eines Wahlschalters 56 und von da zeitverzögert über ein erstes Zeitglied 58 an eine erste elektromagnetische Verstärkeranordnung in Form eines ersten Schaltrelais 60. Ein vom Bus bewirktes zweites Steuersignal gelangt von einem zweiten Steuerausgang 54a der Schnittstellenschaltung 51 über einen zweiten Umschaltkontakt 57a des Wahlschalters 56 und von da zeitverzögert über ein zweites Zeitglied 58a an eine zweite elektromagnetische Verstärkeranordnung in Form eines zweiten Schaltrelais 60a. Eingangsseitig der Zeitglieder 58, 58a ist jeweils eine LED-Zustandsanzeige 40 bzw. 40a angeordnet. Die Schnittstellenschaltung 51 stellt auch hier durch ihre logische Struktur sicher, daß beide Schaltrelais 60, 60a und damit die durch diese anzusteuernden elektromagnetischen Antriebsanordnungen beider Schütze 2, 2a zu keinem Zeitpunkt gleichzeitig im aktiven Zustand sind.

Die bei Null beginnende Zeitverzögerung des Zeitgliedes 58 wird entweder manuell über dessen Einstellmittel 42 eingestellt oder busgesteuert über die Busanschlüsse 32, 34 und schließlich aufbereitet durch die Schnittstellenschaltung 51 über einen Parametereingang 68 des Zeitgliedes 58 eingegeben. In gleicher Weise wird die bei Null beginnende Zeitverzögerung des Zeitgliedes 58a entweder manuell über dessen Einstellmittel 42ä eingestellt oder busgesteuert über die Busanschlüsse 32, 34 und schließlich aufbereitet durch die Schnittstellenschaltung 51 über einen Parametereingang 68a des Zeitgliedes 58a eingegeben. Über sein Betätigungsmittel 38 kann der Wahlschalter 56 die Zeitglieder 58, 58a vom Steuerausgang 54 bzw. 54a der Schnittstellenschaltung 51 trennen und dagegen mit dem konventionellen Steuereingang 36 bzw. 36a verbinden, wodurch die Schaltrelais 60 und 60a dann alternativ durch konventionelle Befehlsgeräte ansteuerbar sind.

Aus den beschriebenen Ausführungsbeispielen ist es offensichtlich zu entnehmen, daß die Einbeziehung von einzelnen oder mehreren Elementen aus dem einen Ausführungsbeispiel in ein anderes Ausführungsbeispiel möglich und sinnvoll ist.

### Bezugszeichenliste

- 2; 2a: Schaltgerät; Schütz
- 3 ... 5: Verstärkerbaustein
- 6: Tragschiene
- 8: Hilfsschalterblock
- 10 ... 12a: Zugangsseite
- 14; 14a: Leistungsklemme
- 16: Hilfsschalterklemme
- 17 ... 19a: Spulenklemme
- 20; 22: Befestigungsmittel
- 24 ... 26a: Antriebsanschluß
- 28; 30: Speisestromanschluß
- 32; 34: Busanschluß
- 36; 36a: konventioneller Steuereingang
- 37: Frontseite
- 38: Betätigungsmittel
- 40; 40a: Zustandsanzeige
- 42; 42a: Einstellmittel
- 44; 46: Meldeanschluß
- 48; 50: Hilfsschalterklemme
- 51 ... 53: Schnittstellenschaltung
- 54; 54a: Steuerausgang
- 55: Bezugspotentialanschluß
- 56: Wahlschalter
- 57; 57a: Umschaltkontakt
- 58; 58a: Zeitglied
- 60; 60a: Schaltrelais
- 62; 62a: Steuerspule
- 64; 64a: Relaiskontakt
- 65: innere Verbindungsleitung
- 66; 66a: Freilaufdiode
- 68; 68a: Parametereingang
- 70: Parameterausgang
- 72 ... 73a: Abtastmittel
- 74; 76: Speisestromleitung
- 78; 80: Busleitung
- 82: äußere verbindungsleitung
- 84; 84a: Befehlsleitung

## Patentansprüche

1. Busfähiger Verstärkerbaustein (4) für elektromagnetische Antriebsanordnungen elektromagnetischer Schaltgeräte, der eine elektromagnetische oder elektronische Verstärkeranordnung (60) enthält, die über eine Schnittstellenschaltung (52) mit Busanschlüssen (32, 34) und einerseits mit Speisestromanschlüssen (28, 30) sowie anderseits mit Antriebsanschlüssen (24, 26) verbunden ist, wobei die Schnittstellenschaltung (52) bidirektional ausgelegt ist, und Schaltungsmittel (44, 46; 58, 70; 73, 73a) für die Erfassung an den Bus zu übergebender Signale über Zustände des Verstärkerbausteins (4; 5) und/oder des Schaltgerätes (2; 2a) und bedarfsweise weitere Schaltungsmittel (58, 68) für vom Bus zu übernehmende Signale für Einstellparameter des Verstärkerbausteins (4; 5) und/oder des Schaltgerätes (2; 2a) vorgesehen sind, **dadurch gekennzeichnet, daß** der Verstärkeranordnung (60; 60a) ein Wahlschalter (56) vorgeschaltet ist, der zusätzlich mit einem konventionellen Steuereingang (36; 36a) verbunden ist und zur wahlweisen Ansteuerung entweder über den Bus oder über konventionelle Befehlsmittel dient.

2. Busfähiger Verstärkerbaustein nach Anspruch 1, **dadurch gekennzeichnet, daß** er eine zweite elektromagnetische oder elektronische Verstärkeranordnung (60a) enthält, die eingangsseitig über die Schnittstellenschaltung (53) mit den Busanschlüssen (32, 34) und einerseits mit den Speisestromanschlüssen (28; 30) sowie anderseits mit wenigstens einem zusätzlichen Antriebsanschluß (26a) für die Antriebsanordnung eines zweiten elektromagnetischen Schaltgerätes (2a) verbunden ist und daß die Aktivierung beider Verstärkeranordnungen (60; 60a) in der Weise erfolgt, daß ausschließlich eine von beiden Antriebsanordnungen einschaltbar ist.

3. Busfähiger Verstärkerbaustein für elektromagnetische Antriebsanordnungen elektromagnetischer Schaltgeräte, der eine elektromagnetische oder elektronische Verstärkeranordnung (60) enthält, die über eine Schnittstellenschaltung (51) mit Busanschlüssen (32; 34) und einerseits mit Speisestromanschlüssen (28; 30) sowie anderseits mit Antriebsanschlüssen (24; 26) verbunden ist, **dadurch gekennzeichnet, daß** der Verstärkerbaustein (3) eine zweite elektromagnetische oder elektronische Verstärkeranordnung (60a) enthält, die eingangsseitig über die Schnittstellenschaltung (51) mit den Busanschlüssen (32; 34) und einerseits mit den Speisestromanschlüssen (28; 30) sowie anderseits mit wenigstens einem zusätzlichen Antriebsanschluß (26a) für die Antriebsanordnung eines zweiten elektromagnetischen Schaltgerätes (2a) verbunden ist, daß der Verstärkeranordnung (60; 60a) ein Wahlschalter (56) vorgeschaltet ist, der zusätzlich mit einem konventionellen Steuereingang (36; 36a) verbunden ist und zur wahlweisen Ansteuerung entweder über den Bus oder über konventionelle Befehlsmittel dient und daß die Aktivierung beider Verstärkeranordnungen (60; 60a) in der Weise erfolgt, daß ausschließlich eine von beiden Antriebsanordnungen einschaltbar ist.

4. Busfähiger Verstärkerbaustein nach einem der vorstehenden Ansprüche, **dadurch gekennzeichnet, daß** der Wahlschalter (56) mit einem Betätigungsmittel verbunden (38) ist.

5. Busfähiger Verstärkerbaustein nach einem der vorstehenden Ansprüche, **dadurch gekennzeichnet, daß** die Verstärkeranordnung (60; 60a) im wesentlichen aus einem Schaltrelais besteht, dessen Steuerspule (62; 62a) mit der Ausgangsseite der Schnittstellenschaltung (51; 52; 53) und dessen Relaiskontakt (64; 64a) zwischen einem (30) der Speisestromanschlüsse (28; 30) und einem (26; 26a) der Antriebsanschlüsse (24; 26; 26a) angeordnet ist, und daß der andere Speisespannungsanschluß (28) direkt mit dem anderen Antriebsanschluß (24) verbunden ist.

6. Busfähiger Verstärkerbaustein Anspruch 1 oder 2, **dadurch gekennzeichnet, daß** der Wahlschalter (56) zusätzlich über ein dessen Zustand erfassendes Abtastmittel (72) mit der Schnittstellenschaltung (52; 53) verbunden ist.

7. Busfähiger Verstärkerbaustein nach einem der vorstehenden Ansprüche, **dadurch gekennzeichnet, daß** der Verstärkeranordnung (60; 60a) ein Zeitglied (58; 58a) mit Einstellmitteln (42; 42a) vorgeschaltet ist.

8. Busfähiger Verstärkerbaustein nach Anspruch 7, **dadurch gekennzeichnet, daß** das Zeitglied (58; 58a) über einen die einzustellende Verzögerungszeit empfangenden Parametereingang (68; 68a) mit der Schnittstellenschaltung (51; 52; 53) verbunden ist.

9. Busfähiger Verstärkerbaustein nach einem der Ansprüche 1 oder 2, **dadurch gekennzeichnet, daß** der Verstärkeranordnung (60; 60a) ein Zeitglied (58; 58a) mit Einstellmitteln (42; 42a) vorgeschaltet ist und das Zeitglied (58; 58a) über einen die eingestellte Verzögerungszeit ausgebenden und/oder das Andauern der Verzögerung anzeigenden Parameterausgang (70) mit der Schnittstellenschaltung (52; 53) verbunden ist.

10. Busfähiger Verstärkerbaustein nach einem der Ansprüche 1 oder 2, **dadurch gekennzeichnet, daß** die Schnittstellenschaltung (52; 53) mit an einen Zustandsmelder des Schaltgerätes (2; 2a) zu führenden Meldeanschlüssen (44, 46) verbunden ist.

11. Busfähiger Verstärkerbaustein nach einem der Ansprüche 1 oder 2, **dadurch gekennzeichnet, daß** die Verstärkeranordnung (60; 60a) über ein dessen Zustand erfassendes weiteres Abtastmittel (73; 73a) mit der Schnittstellenschaltung (52; 53) verbunden ist.

## Claims

1. Bus-compatible amplifier module (4) for electromagnetic drive arrangements for electromagnetic switching devices, which contains an electromagnetic or electronic amplifier arrangement (60) which is connected via an interface circuit (52) to bus connections (32, 34) and on one side to feed current connections (28, 30) and on the other side to drive connections (24, 26), with the interface circuit (52) being designed to be bidirectional and with circuit means (44, 46; 58, 70; 73, 73a) being provided for detection of signals, which are to be passed to the bus, relating to states of the amplifier module (4; 5) and/or of the switching device (2; 2a) and, if necessary, further circuit means (58, 68) being provided for signals, which are to be transferred from the bus, for setting parameters for the amplifier module (4; 5) and/or the switching device (2; 2a), **characterized in that** a selection switch (56) is connected upstream of the amplifier arrangement (60; 60a), is additionally connected to a conventional control input (36; 36a), and is used for selective driving either via the bus or via conventional command means.

2. Bus-compatible amplifier module according to Claim 1, **characterized in that** the amplifier module contains a second electromagnetic or electronic amplifier arrangement (60a) which is connected on the input side via the interface circuit (53) to the bus connections (32, 34) and on one side to the feed current connections (28, 30) and on the other side to at least one additional drive connection (26a) for the drive arrangement for a second electromagnetic switching device (2a), and **in that** both amplifier arrangements (60, 60a) are activated in such a way that only one of two drive arrangements can be switched on.

3. Bus-compatible amplifier module for electromagnetic drive arrangements for electromagnetic switching devices, which contains an electromagnetic or electronic amplifier arrangement (60) which is connected via an interface circuit (51) to bus connections (32, 34) and on one side to feed current connections (28, 30) and on the other side to drive connections (24, 26), **characterized in that** the amplifier module (3) contains a second electromagnetic or electronic amplifier arrangement (60a) which is connected on the input side via the interface circuit (51) to the bus connections (32, 34) and on one side to the feed current connections (28, 30) and on the other side to at least one additional drive connection (26a) for the drive arrangement for a second electromagnetic switching device (2a), **in that** a selection switch (56) is connected upstream of the amplifier arrangement (60; 60a), is additionally connected to a conventional control input (36; 36a), and is used for selective driving either via the bus or via conventional command means, and **in that** both amplifier arrangements (60, 60a) are activated in such a way that only one of two drive arrangements can be switched on.

4. Bus-compatible amplifier module according to one of the preceding claims, **characterized in that** the selection switch (56) is connected (38) to an operating means.

5. Bus-compatible amplifier module according to one of the preceding claims, **characterized in that** the amplifier arrangement (60; 60a) essentially comprises a switching relay, whose control coil (62; 62a) is arranged with the output side of the interface circuit (51; 52; 53) and whose relay contact (64; 64a) is arranged between one (30) of the feed current connections (28; 30) and one (26; 26a) of the drive connections (24; 26; 26a), and **in that** the other feed voltage connection (28) is connected directly to the other drive connection (24).

6. Bus-compatible amplifier module according to Claim 1 or 2, **characterized in that** the selection switch (56) is additionally connected to the interface circuit (52; 53) via a sensing means (72) which detects its state.

7. Bus-compatible amplifier module according to one of the preceding claims, **characterized in that** a timer (58; 58a) with adjusting means (42; 42a) is connected upstream of the amplifier arrangement (60; 60a).

8. Bus-compatible amplifier module according to Claim 7, **characterized in that** the timer (58; 58a) is connected to the interface circuit (51; 52; 53) via a parameter input (68; 68a) which receives the delay time that is to be set.

9. Bus-compatible amplifier module according to one of Claims 1 or 2, **characterized in that** a timer (58; 58a) with adjusting means (42; 42a) is connected upstream of the amplifier arrangement (60; 60a), and the timer (58; 58a) is connected to the interface circuit (52; 53) via a parameter output (70) which emits the selected delay time and/or indicates the duration of the delay.

10. Bus-compatible amplifier module according to one of Claims 1 to 2, **characterized in that** the interface circuit (52; 53) is connected to signalling connections (44, 46) which can be connected to a state indicator for the switching device (2; 2a).

11. Bus-compatible amplifier module according to one of Claims 1 or 2, **characterized in that** the amplifier arrangement (60; 60a) is connected to the interface circuit (52; 53) via a further sensing means (73; 73a) which detects its state.

## Revendications

1. Module d'amplification avec interface de bus (4) pour agencements de commande électromagnétiques de dispositifs de commutation électromagnétiques, contenant un agencement d'amplification (60) électromagnétique ou électronique relié à travers un circuit interface (52) à des connexions au bus (32, 34) et d'une part avec les connexions d'alimentation électrique (28, 30) et d'autre part avec les connexions de commande (24, 26), le circuit interface (52) étant réalisé en bidirectionnel, et des moyens de commutation (44, 46 ; 58, 70 ; 73, 73a) étant prévus pour l'enregistrement de signaux à transmettre vers le bus concernant les états du module d'amplification (4 ; 5) et/ou du dispositif de commutation (2 ; 2a), et en fonction des besoins, d'autres moyens de commutation (58, 68) étant prévus pour l'enregistrement de signaux à recevoir du bus concernant des paramètres de réglage du module d'amplification (4 ; 5) et/ou du dispositif de commutation (2 ; 2a), **caractérisé en ce qu'**un commutateur de sélection (56) est branché en amont de l'agencement d'amplification (60 ; 60a) et qui est de plus relié à une entrée de commande conventionnelle (36 ; 36a) et qui sert au choix de la commande à travers le bus, ou à travers des moyens de commande conventionnels.

2. Module d'amplification avec interface de bus selon la revendication 1, **caractérisé en ce qu'**il contient un deuxième agencement d'amplification (60a) électromagnétique ou électronique relié du côté des entrées aux connexions au bus (32, 34) à travers le circuit interface (53) et d'une part avec les connexions d'alimentation électrique (28 ; 30) ainsi que d'autre part avec au moins une connexion de commande (26a) pour l'agencement de commande d'un deuxième dispositif de commutation (2a) électromagnétique et **en ce que** l'activation des deux agencements d'amplification (60 ; 60a) est réalisée de telle sorte qu'on ne peut enclencher qu'un seul des deux agencements de commande.

3. Module d'amplification avec interface de bus pour agencements de commande électromagnétiques de dispositifs de commutation électromagnétiques, contenant un agencement d'amplification (60) électromagnétique ou électronique relié à travers un circuit interface (51) à des connexions au bus (32 ; 34) et d'une part avec les connexions d'alimentation électrique (28 ; 30) ainsi que d'autre part avec les connexions de commahde (24 ; 26),
**caractérisé en ce que** le module d'amplification (3) contient un deuxième agencement d'amplification (60a) électromagnétique ou électronique relié du côté des entrées aux connexions au bus (32 ; 34) à travers le circuit interface (51) et d'une part avec les connexions d'alimentation électrique (28 ; 30) ainsi que d'autre part avec au moins une connexion de commande (26a) supplémentaire pour l'agencement de commande d'un deuxième dispositif de commutation (2a),
**en ce qu'**un commutateur de sélection (56) est branché en amont de l'agencement d'amplification (60 ; 60a) et qui est de plus relié à une entrée de commande conventionnelle (36 ; 36a) et qui sert au choix de la commande à travers le bus, ou à travers des moyens de commande conventionnels et **en ce que** l'activation des deux agencements d'amplification (60 ; 60a) est réalisée de telle sorte qu'on ne peut enclencher qu'un seul des deux agencements de commande.

4. Module d'amplification avec interface de bus selon une des revendications précédentes, **caractérisé en ce que** le commutateur de sélection (56) est relié à un moyen d'actionnement (38).

5. Module d'amplification avec interface de bus selon une des revendications précédentes, **caractérisé en ce que** l'agencement d'amplification (60 ; 60a) est essentiellement constitué d'un relais de commutation dont la bobine de commande (62 ; 62a) est disposée avec le côté des sorties du circuit d'interface (51 ; 52 ; 53) et ses contacts de relais (64; 64a) entre une (30) des connexions d'alimentation électrique (28 ; 30) et une (26 ; 26a) des connexions de commande (24 ; 26 ; 26a), et **en ce que** l'autre connexion d'alimentation de tension (28) est reliée directement avec l'autre connexion de commande (24).

6. Module d'amplification avec interface de bus selon la revendication 1 ou 2, **caractérisé en ce que** le commutateur de sélection (56) est de plus relié au circuit d'interface (52 ; 53) à travers un moyen de lecture (72) qui enregistre son état.

7. Module d'amplification avec interface de bus selon une des revendications précédentes, **caractérisé en ce qu'**un élément de temporisation (58 ; 58a) avec des moyens de réglage (42 ; 42a) est branché en amont de l'agencement d'amplification (60 ; 60a).

8. Module d'amplification avec interface de bus selon la revendication 7, **caractérisé en ce que** l'élément de temporisation (58 ; 58a) est relié au circuit d'interface (51 ; 52 ; 53) à travers une entrée de paramètre (68 ; 68a) qui reçoit le retard de temporisation à régler.

9. Module d'amplification avec interface de bus selon une des revendications 1 ou 2, **caractérisé en ce qu'**un élément de temporisation (58 ; 58a) avec des moyens de réglage (42 ; 42a) est branché en amont de l'agencement d'amplification (60 ; 60a) et que l'élément de temporisation (58 ; 58a) est relié au circuit d'interface (52 ; 53) à travers une sortie de paramètre (70) qui fournit le retard de temporisation réglé et/ou qui indique la durée de la temporisation.

10. Module d'amplification avec interface de bus selon une des revendications 1 ou 2, **caractérisé en ce que** le circuit d'interface (52 ; 53) est relié à des connexions d'information (44, 46) menant à un indicateur de l'état du dispositif de commutation (2 ; 2a).

11. Module d'amplification avec interface de bus selon une des revendications 1 ou 2, **caractérisé en ce que** l'agencement d'amplification (60 ; 60a) est relié au circuit d'interface (52 ; 53) à travers un moyen de lecture (73 ; 73a) supplémentaire qui enregistre son état.
